# EUROPÄISCHE PATENTSCHRIFT

(11) **EP 2 026 455 B1**
(45) Veröffentlichungstag und Bekanntmachung des Hinweises auf die Patenterteilung: **14.03.2012**
(21) Anmeldenummer: 08014036.1
(22) Anmeldetag: 06.08.2008
(51) Int. Cl.: H02M 7/48

(54) **Verfahren zum Betreiben einer elektrischen Schaltung sowie elektrischen Schaltung zur Verminderung von Überspannungen an von Wechselrichtungen gespeisten Lasten**
Method for operating an electrical switch and corresponding electrical switch to avoid electrical surges on loads fed by inverters
Procédé de fonctionnement d'une commutation électrique et commutation électrique destinée à éviter les surtensions sur des charges alimentées en sens inverses

(30) Priorität: 16.08.2007 DE 102007038434
(43) Veröffentlichungstag der Anmeldung: 18.02.2009
(73) Patentinhaber: Converteam GmbH, 12277 Berlin (DE)
(72) Erfinder: Eggert, Bernhard, Dr., 13591 Berlin (DE); Hofmeyer, Dominik, Dr., 14552 Michendorf (DE); Steglich, Jürgen, 10965 Berlin (DE)
(74) Vertreter: Schäfer, Wolfgang

(56) Entgegenhaltungen:
- WO-A-01/80412
- DE-A1- 19 727 616
- GB-A- 2 359 943
- US-A- 5 923 550
- BAKARI MWINYIWIWA ET AL: "Microprocessor-Implemented SPWM for Multiconverters with Phase-Shifted Triangle Carriers" IEEE TRANSACTIONS ON INDUSTRY APPLICATIONS, IEEE SERVICE CENTER, PISCATAWAY, NJ, US, Bd. 34, Nr. 3, 1. Juni 1998 (1998-06-01), XP011022391 ISSN: 0093-9994

## Beschreibung

Die Erfindung betrifft ein Verfahren zum Betreiben einer elektrischen Schaltung sowie eine elektrische Schaltung zur Verminderung von Überspannungen an von Wechselrichtern gespeisten Lasten.

Es ist bekannt, Motoren oder andere elektrische Lasten mit Hilfe von geschalteten Umrichtern zu betreiben. Sind beispielsweise mehrere Motoren vorhanden, so kann jedem Motor ein Wechselrichter zugeordnet werden, und die Wechselrichter können dann über einen Gleichspannungszwischenkreis oder einen Gleichstromzwischenkreis und über einen Gleichrichter an ein Wechselspannungsnetz angeschlossen werden.

Weiterhin ist bekannt, dass die Verwendung von geschalteten Umrichtern das Entstehen von Gleichtaktspannungen mit sich bringt. Je größer die Spannungssprünge der Umrichter bzw. der daraus resultierenden Gleichtaktspannung dabei sind, desto größer sind die entstehenden lastseitigen Spannungsüberhöhungen. Weiterhin ist es möglich, dass die entstehenden Spannungsüberhöhungen sich insbesondere in Kombination mit Leitungsinduktivitäten und Isolationskapazitäten gegebenenfalls noch überlagern und damit vergrößern.

Beispielsweise bei Kleinstdrehzahlen eines Motors kann auf der Maschinenseite ein Spannungssprung von. 3/3 der Zwischenkreisspannung und auf der Netzseite ein Spannungssprung von 2/3 entstehen. Dies ergibt eine gesamte Sprunghöhe von 5/3, die sich gegebenenfalls aufgrund eines von dem Motor und dessen Zuleitungen gebildeten Schwingkreises noch verdoppeln kann.

Die entstehenden Spannungsüberhöhungen belasten die Isolation der spannungsführenden elektrischen Komponenten. Es ist deshalb häufig erforderlich, die Isolation der spannungsführenden Komponenten im Hinblick auf die möglichen Spannungsüberhöhungen zu verstärken und/oder sogenannte du/dt-Filter zur Begrenzung von Spannungsanstiegen einzuführen.

Im Stand der Technik sind GB 2 359 943 und US 5 923 550 auch bekannt.

Aufgabe der Erfindung ist es, ein Verfahren zum Betreiben einer elektrischen Schaltung sowie eine elektrische Schaltung zur Verfügung zu stellen, die die erläuterten Spannungsüberhöhungen bzw. deren Auswirkungen vermindern. Die Erfindung löst diese Aufgabe durch ein Verfahren nach dem Anspruch 1 sowie durch eine elektrische Schaltung nach dem Anspruch 3.

Das erfindungsgemäße Verfahren ist zur Verminderung von Überspannungen an von Wechselrichtern gespeisten Lasten vorgesehen. Zu diesem Zweck werden die Schalthandlungen der Wechselrichter derart vorgenommen, dass Überlagerungen von Spannungssprüngen vermieden werden.

Es wird also die Überlagerung von Spannungssprüngen an den Wechselrichtern vermieden oder zumindest vermindert. Dies bringt den Vorteil mit sich, dass Spannungsüberhöhungen an der Last vermindert werden und damit geringer sind.

Durch diese Vermeidung von Spannungssprüngen wird also erreicht, dass die Isolation der spannungsführenden Komponenten nicht oder zumindest nur in einem geringen Umfang verstärkt werden muss. Ebenfalls sind die erwähnten du/dt-Filter nicht oder nur in geringem Umfang erforderlich. Dies bringt wesentliche Kostenvorteile mit sich.

Bei einer vorteilhaften Ausgestaltung der Erfindung fallen die Schalthandlungen der Wechselrichter zeitlich auseinander. Vorzugsweise finden die Schalthandlungen der Wechselrichter zeitlich versetzt zueinander statt. Damit ist es auf einfache Weise möglich, die Schalthandlungen der Wechselrichter gerade so vorzunehmen, dass möglichst keine Überlagerungen von Spannungsüberhöhungen entstehen können.

Bei einer vorteilhaften Weiterbildung der Erfindung sind die Wechselrichter über einen Zwischenkreis mit einem Gleichrichter gekoppelt. In diesem Fall werden die Schalthandlungen des Gleichrichters und der Wechselrichter in entsprechender Weise vorgenommen.

Besonders vorteilhaft ist es, wenn die Schalthandlungen der Wechselrichter und/oder des Gleichrichters zeitlich zueinander eingestellt werden. Dies kann beispielsweise mit Hilfe einer Kopplung der vorhandenen Pulsmustergeneratoren vorgenommen werden.

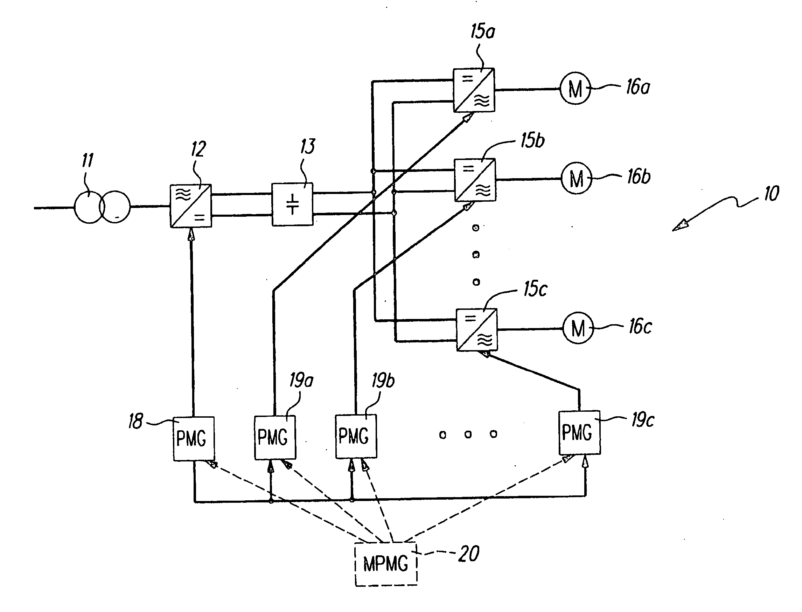

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Die einzige Figur der Zeichnung zeigt ein schematisches Blockschaltbild eines Ausführungsbeispiels einer erfindungsgemäßen elektrischen Schaltung zur Verminderung von Überspannungen an von Wechselrichtern gespeisten Lasten.

In der elektrischen Schaltung 10 der Figur ist ein an ein Wechselspannungsnetz angeschlossener Transformator 11 vorgesehen, aus dem ein netzseitiger Gleichrichter 12 gespeist wird. Ausgangsseitig ist an den Gleichrichter 12 ein Zwischenkreis 13 angeschlossen, der insbesondere einen Kondensator aufweisen kann. Die von dem Gleichrichter 12 erzeugte und an dem Zwischenkreis 13 anliegende Gleichspannung wird an eine Mehrzahl von maschinenseitigen Wechselrichtern 15a, 15b, 15c weitergegeben. Jeder der Wechselrichter 15a, 15b, 15c erzeugt aus der anliegenden Gleichspannung eine bestimmte, vorgegebene Wechselspannung. Ausgangsseitig ist jeder der Wechselrichter 15a, 15b, 15c über eine elektrische Verbindungsleitung mit einer Last 16a, 16b, 16c verbunden, die in der Figur beispielhaft als Motor dargestellt ist. Die von dem jeweiligen Wechselrichter 15a, 15b, 15c erzeugte Wechselspannung ist an die jeweils nachfolgende Last 16a, 16b, 16c angepasst.

Bei dem Gleichrichter 12 und bei den Wechselrichtern 15a, 15b, 15c handelt es sich um geschaltete Umrichter, die jeweils mit Schaltsignalen beaufschlagt werden. Zu diesem Zweck ist ein Pulsmustergenerator (PMG) 18 vorgesehen, der die Schaltsignale für den netzseitigen Gleichrichter 12 erzeugt. Weiterhin sind Pulsmustergeneratoren (PMG) 19a, 19b, 19c vorgesehen, die die Schaltsignale für die maschinenseitigen Wechselrichter 15a, 15b, 15c erzeugen.

Der Gleichrichter 12 und die Wechselrichter 15a, 15b, 15c weisen Halbleiterschalter auf, die durch die Schaltsignale leitend oder sperrend geschaltet werden. Auf diese Weise werden die drei Phasen der Wechselspannung erzeugt, mit denen die jeweils zugehörigen Lasten 16a, 16b, 16c versorgt werden. Die Summe der drei Phasen der jeweiligen Wechselspannungen ist an sich immer Null. Die erläuterten Schalthandlungen bzw. die daraus resultierenden Spannungssprünge des Gleichrichters 12 und der Wechselrichter 15a, 15b, 15c führen jedoch dazu, dass eine nach Masse gerichtete Gleichtaktspannung entsteht. Bei dieser Gleichtaktspannung handelt es sich um eine Rechteckspannung, deren Sprungstellen und Sprunghöhen von den Schalthandlungen abhängig sind.

Eine derartige Gleichtaktspannung entsteht beispielsweise durch die Schalthandlungen des Wechselrichters 15a auf der Verbindungsleitung von diesem Wechselrichter 15a zu der zugehörigen Last 16a. Diese Verbindungsleitung besitzt eine Leitungsinduktivität sowie eine Isolationskapazität und bildet damit einen Schwingkreis. Dieser Schwingkreis hat zur Folge, dass sich die Gleichtaktspannung an der Isolationskapazität der Verbindungsleitung sogar noch verdoppeln kann.

Entsprechende lastbezogene Gleichtaktspannungen entstehen auch auf den Verbindungsleitungen zu den Lasten 16b, 16c. Bei zusammenfallenden Schalthandlungen können sich diese lastbezogenen Gleichtaktspannungen überlagern. Ebenfalls können sich die Gleichtaktspannungen auf der Maschinen- und der Netzseite überlagern. Dies kann zu weitreichenden Spannungsüberhöhungen führen.

Wie erläutert wurde, werden die Schaltsignale für den Gleichrichter 12 und die Wechselrichter 15a, 15b, 15c von den zugehörigen PMGs 18, 19a, 19b, 19c erzeugt. Dies wird nach einer vorgegebenen Steuerung oder Regelung durchgeführt, und zwar derart, dass die jeweils angeschlossene Last 16a, 16b, 16c mit der erwünschten Wechselspannung beaufschlagt wird. Diese Steuerung und/oder Regelung wird als solche nicht verändert.

In einer ersten Alternative, die in der Figur mit durchgezogenen Linien dargestellt ist, stellt der PMG 18 einen sogenannten "Master" und die PMGs 19a, 19b, 19c jeweils sogenannte "Slaves" dar. Der PMG 18 kann damit die PMGs 19a, 19b, 19c beeinflussen.

In einer zweiten Alternative, die in der Figur mit gestrichelten Linien dargestellt ist, ist ein zusätzlicher Master-Pulsmustergenerator (MPMG) 20 vorgesehen, der also einen sogenannten "Master" darstellt. Die PMGs 18, 19a, 19b, 19c stellen jeweils sogenannte "Slaves" dar. Der MPMG 20 kann damit die PMGs 18, 19a, 19b, 19c beeinflussen.

Bei beiden Alternativen ist somit ein Master vorhanden, der einen oder mehrere Slaves beeinflussen kann. Diese Beeinflussung der Slaves wird von dem Master ganz allgemein derart vorgenommen, dass Überlagerungen von Spannungssprüngen vermieden werden.

Zu diesem Zweck sind die PMGs 18, 19a, 19b, 19c miteinander gekoppelt und es erfolgt eine Kommunikation zwischen dem Master und den Slaves, mit deren Hilfe die vorhandenen Gleich- und Wechselrichter 12, 15a, 15b, 15c derart koordiniert werden, dass die Schalthandlungen der Gleich- und Wechselrichter 12, 15a, 15b, 15c zeitlich nicht zusammenfallen bzw. zeitlich auseinanderfallen.

Die erwähnte Steuerung und/oder Regelung der einzelnen Gleich- und Wechselrichter 12, 15a, 15b, 15c bleibt dabei erhalten. Die Schaltdauern zwischen den einzelnen Schalthandlungen, also insbesondere die Pulsdauer des leitenden Zustands der Halbleiterschalter, bleibt also unverändert. Zum Zwecke der Koordination werden nur die Zeitpunkte der Schalthandlungen beeinflusst. Es wird also beispielsweise ein Einschaltpuls insgesamt zeitlich verschoben, ohne dass seine Pulsdauer verändert wird.

Der Master beeinflusst den oder die Slaves also derart, dass einerseits die Schalthandlungen der Gleich- und Wechselrichter 12, 15a, 15b, 15c nicht zusammenfallen, dass aber andererseits die Steuerung und/oder Regelung der einzelnen Gleich- und Wechselrichter 12, 15a, 15b, 15c nicht verändert wird. Zu diesem Zweck erfolgt eine zeitliche Verschiebung der Schalthandlungen derart, dass die Pulsdauern der leitenden und sperrenden Zustände der Halbleiterschalter unverändert bestehen bleiben.

Beispielsweise kann die Koordination dahingehend vorgenommen werden, dass die Schalthandlungen der einzelnen Gleich- und Wechselrichter 12, 15a, 15b, 15c zeitlich zueinander versetzt stattfinden.

Bei der ersten Alternative ist es beispielsweise möglich, dass die Schalthandlungen des PMG 18 (Master) immer an einem Winkel ϕ ausgerichtet sind. Gleichzeitig kann der PMG 18 die PMGs 19a, 19b, 19c (Slaves) anweisen, dass deren Schalthandlungen zeitversetzt durchgeführt werden, also dass die Schalthandlungen des PMG 19a z.B. immer an einem Winkel ϕ+Δϕ1 ausgerichtet sind, die Schalthandlungen des PMG 19b z.B. immer an einem Winkel ϕ+Δϕ2, und die Schalthandlungen des PMG 19c z.B. immer an einem Winkel ϕ+Δϕ3, und so weiter.

Bei der zweiten Alternative ist es beispielsweise möglich, dass der MPMG 20 die PMGs 18, 19a, 19b, 19c dahingehend anweist, dass deren Schalthandlungen immer zeitversetzt durchgeführt werden. So können die Schalthandlungen des PMG 18 z.B. immer an einem Winkel ϕ+Δϕ1 ausgerichtet werden, die Schalthandlungen des PMG 19a z.B. immer an einem Winkel ϕ+Δϕ2, die Schalthandlungen des PMG 19b z.B. immer an einem Winkel ϕ+Δϕ3, und die Schalthandlungen des PMG 19c z.B. immer an einem Winkel ϕ+Δϕ4, und so weiter.

Als weitere Alternative ist es möglich, dass die PMGs 18, 19a, 19b, 19c gleichberechtigt sind und kein Master vorhanden ist, also insbesondere kein MPMG 20. In diesem Fall können die Schalthandlungen jedes einzelnen PMGs 18, 19a, 19b oder 19c an alle anderen PMGs weitergegeben werden. Diese anderen PMGs kennen damit die Winkel der Schalthandlungen aller anderen PMGs und können damit ihre eigenen Schalthandlungen in Abhängigkeit von den Schalthandlungen der anderen PMGs bestimmen. Insbesondere kann jeder einzelne der PMGs 18, 19a, 19b, 19c seine eigenen Schalthandlungen derart wählen, dass möglichst keine Überlagerungen mit Schalthandlungen der anderen PMGs entstehen.

Durch die beschriebene Vorgehensweise wird erreicht, dass beispielsweise bei Kleinstdrehzahlen eines Motors die Spannungssprünge auf der Maschinenseite auf 3/3 begrenzt bleiben. Hierzu wird bei allen Wechselrichtern 15a, 15b, 15c Δϕi auf denselben Wert gesetzt. Dieser Wert ist immer ungleich 180 Grad. Dies hat zur Folge, dass auf der Maschinenseite zwischen den Lasten keine Schwingkreise angeregt werden. Es entsteht damit auch keine daraus resultierende zusätzliche Spannungsüberhöhung. Durch diese, von dem Master vorgenommene Synchronisierung aller Wechselrichter 15a, 15b, 15c wird somit eine Überlagerung von maschinenseitigen Spannungsüberhöhungen vermieden.

Weiterhin wird durch diese Vorgehensweise erreicht, dass die Spannungsüberhöhungen auf der Maschinenseite auch nicht durch die Netzseite weiter erhöht werden. Hierzu wird bei dem Gleichrichter 12 Δϕ = 0 gesetzt. Dies hat zur Folge, dass die Schalthandlungen mit besonders großen Spannungssprüngen auf der Netzseite zeitlich verschoben sind zu den Schalthandlungen auf der Maschinenseite. Es entsteht damit keine Überlagerung dieser Spannungssprünge von Netz- und Motorseite. Durch diese, von dem Master vorgenommene Synchronisierung des Gleichrichters 12 und der Wechselrichter 15a, 15b, 15c wird somit eine Überlagerung von besonders großen Spannungsüberhöhungen vermieden.

## Patentansprüche

1. Verfahren zum Betreiben einer elektrischen Schaltung (10) zur Verminderung von Überspannungen an von Wechselrichtern (15a, 15b, 15c) gespeisten Lasten (16a, 16b, 16c), wobei die Wechselrichter (15a (15b, 15c) über einen Zwischenkreis (13) mit einem Gleichrichter (12) verbunden sind, und wobei von jedem der Wechselrichter (15a, 15b, 15c) eine vorgegebene Wechselspannung für eine der Lasten (16a, 16b, 16c) erzeugt wird, **dadurch gekennzeichnet, dass** bei dem Verfahren die Schalthandlungen des Gleichrichters und der Wechselrichter zeitlich versetzt zueinander eingestellt werden.

2. Verfahren nach Anspruch 1, bei dem die Schalthandlungen aller Wechselrichter auf denselben Winkel ϕ + Δϕi mit Δϕi ≠ 180 Grad und die Schalthandlungen des Gleichrichters auf den Winkel ϕ + Δϕ mit Δϕ = 0 gesetzt werden.

3. Elektrische Schaltung (10) zur Verminderung von Überspannungen an von Wechselrichtern (15a, 15b, 15c) gespeisten Lasten (16a, 16b, 16c), wobei die Wechselrichter (15a, 15b, 15c) über einen Zwischenkreis (13) mit eine Gleichrichter (12) verbunden sind, und wobei von jedem der Wechselrichter (15a, 15b, 15c) eine vorgegebene Wechselspannung für eine der Lasten (16a, 16b, 16c) erzeugbar ist, **dadurch gekennzeichnet, dass** jedem der Wechselrichter (15a, 15b, 15c) ein Pulsmustergenerator (19a, 19b, 19c) zugeordnet ist, dass dem Gleichrichter (12) ein Pulsmustergenerator (18) zugeordnet ist, dass die Pulsmustergeneratoren miteinander gekoppelt sind, und dass die Pulsmustergeneratoren derart ausgebildet sind, dass die Schalthandlungen des Gleichrichters und der Wechselrichter zeitlich versetzt zueinander einstellbar sind.

## Claims

1. Method of operating an electrical circuit (10) to reduce over-voltages at loads (16a, 16b, 16c) fed by inverters (15a, 15b, 15c), the inverters (15a, 15b, 15c) being connected to a rectifier (12) via a link circuit (13), and a preset a.c. voltage for a respective one of the loads (16a, 16b, 16c) being produced by each of the inverters (15a, 15b, 15c), **characterised in that**, in the method, the switching operations of the rectifier and the inverters are set to be offset from one another in time.

2. Method according to claim 1, in which the switching operations of all the inverters are set to the same angle ϕ + Δϕi, where Δϕi ≠ 180°, and the switching operations of the rectifier are set to the angle ϕ + Δϕ, where Δϕ = 0.

3. Electrical circuit (10) for reducing over-voltages at loads (16a, 16b, 16c) fed by inverters (15a, 15b, 15c), the inverters (15a, 15b, 15c) being connected to a rectifier (12) via a link circuit (13), and a preset a.c. voltage for a respective one of the loads (16a, 16b, 16c) being able to be produced by each of the inverters (15a, 15b, 15c), **characterised in that** each of the inverters (15a, 15b, 15c) has a pulse-pattern generator (19a, 19b, 19c) associated with it, **in that** the rectifier (12) has a pulse-pattern generator (18) associated with it, **in that** the pulse-pattern generators are coupled together, and **in that** the pulse-pattern generators are so designed that the switching operations of the rectifier and the inverters can be set to be offset from one another in time.

## Revendications

1. Procédé de fonctionnement d'un circuit de commutation électrique (10) pour minimiser les surtensions aux bornes de charges (16a, 16b, 16c) alimentées par des onduleurs (15a, 15b, 15c), les onduleurs (15a, 15b, 15c) étant reliés par le biais d'un circuit intermédiaire (13) à un redresseur (12) et chacun des onduleurs (15a, 15b, 15c) générant une tension alternative prédéfinie pour une des charges (16a, 16b, 16c), **caractérisé en ce que**, dans le procédé, les actions de commutation du redresseur et des onduleurs sont ajustées avec un décalage dans le temps les unes par rapport aux autres.

2. Procédé selon la revendication 1, dans lequel les actions de commutation de tous les onduleurs sont réglées au même angle _{ϕ} + Δϕᵢ, avec Δϕᵢ ≠ 180 degrés, et les actions de commutation du redresseur sont réglées à l'angle ϕ + Δϕ, avec Aϕ = 0.

3. Circuit de commutation électrique (10) pour minimiser les surtensions aux bornes de charges (16a, 16b, 16c) alimentées par des onduleurs (15a, 15b, 15c), les onduleurs (15a, 15b, 15c) étant reliés par le biais d'un circuit intermédiaire (13) à un redresseur (12) et chacun des onduleurs (15a, 15b, 15c) pouvant générer une tension alternative prédéfinie pour une des charges (16a, 16b, 16c), **caractérisée en ce qu'**un générateur de séquences d'impulsions (19a, 19b, 19c) est associé à chacun des onduleurs (15a, 15b, 15c), **en ce qu'**un générateur de séquences d'impulsions (18) est associé au redresseur (12), **en ce que** les générateurs de séquences d'impulsions sont couplés les uns aux autres et **en ce que** les générateurs de séquences d'impulsions sont configurés de façon à pouvoir ajuster les actions de commutation du redresseur et des onduleurs avec un décalage dans le temps les unes par rapport aux autres.
